(19) Europäisches Patentamt

European Patent Office

Office européen des brevets

(11) Veröffentlichungsnummer : **0 360 034 B1**

(12) # EUROPÄISCHE PATENTSCHRIFT

(45) Veröffentlichungstag der Patentschrift :
**29.07.92 Patentblatt 92/31**

(51) Int. Cl.$^5$ : **B01D 19/00**

(21) Anmeldenummer : **89115824.8**

(22) Anmeldetag : **28.08.89**

(54) **Vorrichtung zum Verteilen eines strömenden Flüssigkeits-Gas-Gemisches in mehrere Teilströme.**

(30) Priorität : **29.08.88 DE 3829263**

(43) Veröffentlichungstag der Anmeldung :
**28.03.90 Patentblatt 90/13**

(45) Bekanntmachung des Hinweises auf die
Patenterteilung :
**29.07.92 Patentblatt 92/31**

(84) Benannte Vertragsstaaten :
**DE FR GB IT**

(56) Entgegenhaltungen :
**DE-A- 3 425 616**
**DE-U- 8 625 139**
**FR-A- 2 111 269**
**FR-A- 2 610 105**

(73) Patentinhaber : **Schmitz, Uwe Dipl.-Ing.**
**Geschwister Scholl - Platz 4**
**W-8080 Fürstenfeldbruck (DE)**

(72) Erfinder : **Schmitz, Uwe Dipl.-Ing.**
**Geschwister Scholl - Platz 4**
**W-8080 Fürstenfeldbruck (DE)**

(74) Vertreter : **Stahl, Gerhard F.W.**
**Patentanwalt Dipl.-Ing. Gerhard F.W. Stahl**
**Heilmannstrasse 10**
**W-8000 München 71 (DE)**

EP 0 360 034 B1

## Beschreibung

Die Erfindung betrifft eine Vorrichtung zum Verteilen eines strömenden Flüssigkeits-Gas-Gemisches in mehrere Teilströme der im Oberbegriff des Patentanspruchs 1 angegebenen Bauart.

Bei einer in der DE-C- 27 31 279 beschriebenen Vorrichtung dieser Gattung ist das Zuführrohr vertikal durch den Boden des Abscheiders hindurchgeführt. Im Abstand von der Decke des Abscheiders ist eine horizontale Zwischenwand vorgesehen, die den Abscheider in einen oberen und einen unteren Abschnitt aufteilt. In dieser Zwischenwand sind eine zentrale Öffnung für die Zuführleitung sowie weitere Öffnungen im Bereich der Seitenwand des Abscheiders angeordnet, die den oberen mit dem unteren Abschnitt verbinden, wobei das Flüssigkeits-Gas-Gemisch über die Decke, die Zwischenwand und die weiteren Öffnungen umgelenkt wird. Die Abführrohre enden unterhalb der Zwischenwand, und sie sind von den weiteren Öffnungen im Abstand angeordnet. Die schirmartige Zwischenwand bildet zusammen mit der Decke des Abscheiders eine radiale Strömungsführung, die verhindern soll, daß die flüssige Phase unmittelbar nach unten in den sich im Abscheider ausbildenden Flüssigkeitsvorrat fällt und dort zu unerwünschter Verwirbelung und Blasenbildung führt. Da die gasförmige Phase mit hoher Geschwindigkeit aus den im Bereich der Seitenwand des Abscheiders angeordneten Öffnungen der Zwischenwand nach unten austritt, reißt sie die flüssige Phase mit, so daß sich diese mit verhältnismäßig großer Geschwindigkeit längs der Seitenwand des Abscheiders nach unten bewegt. Wegen der großen Aufprallgeschwindigkeit der flüssigen Phase auf den in dem Behälter gebildeten Flüssigkeitsvorrat besteht aber die Gefahr einer unerwünschten Verwirbelung und Blasenbildung, was der angestrebten Phasentrennung im Bereich der Durchtrittsöffnungen der Abführrohre entgegensteht.

Der Erfindung liegt die Aufgabe zugrunde, eine gattungsgemäße Vorrichtung zu schaffen, bei der Turbulenzen im Bereich der Durchtrittsöffnungen der Abführrohre weitgehend vermieden werden.

Die Lösung dieser Aufgabe ist im Patentanspruch 1 angegeben.

Der von dem Abscheider und dem inneren Zylinder begrenzte Ringraum wirkt als Beruhigungszone, in der sich die gasförmige und die flüssige Phase des durch das Zuführrohr eintretenden Gemisches trennen und beruhigen können, so daß die durch die Überströmöffnungen in den Innenraum des inneren Zylinders übergetretenen Phasen weitestgehend turbulenzfrei sind. In dem die Abführ-rohre aufnehmenden Innenraum des inneren Zylinders liegen daher zwei scharf getrennte Phasen vor. Da in dem inneren Zylinder keinerlei Einbauten vorhanden sind und somit der gesamte Raum für die Abführrohre zur Verfügung steht, wird im Vergleich zum Stand der Technik eine sehr raumsparende Ausführung erreicht.

Zweckmäßige Weiterbildungen der Erfindung ergeben sich aus den Unteransprüchen.

In den Zeichnungen sind einige Ausführungsbeispiele der Erfindung dargestellt, die nachfolgend näher erläutert werden.

Es zeigen:

Fig. 1 einen vertikalen Schnitt durch einen Abscheider,

Fig. 2 einen horizontalen Schnitt durch den Abscheider nach Fig. 1,

Fig. 3 einen vertikalen Schnitt durch einen abgewandelten Abscheider, und

Fig. 4 einen horizontalen Schnitt durch den Abscheider nach Fig. 3.

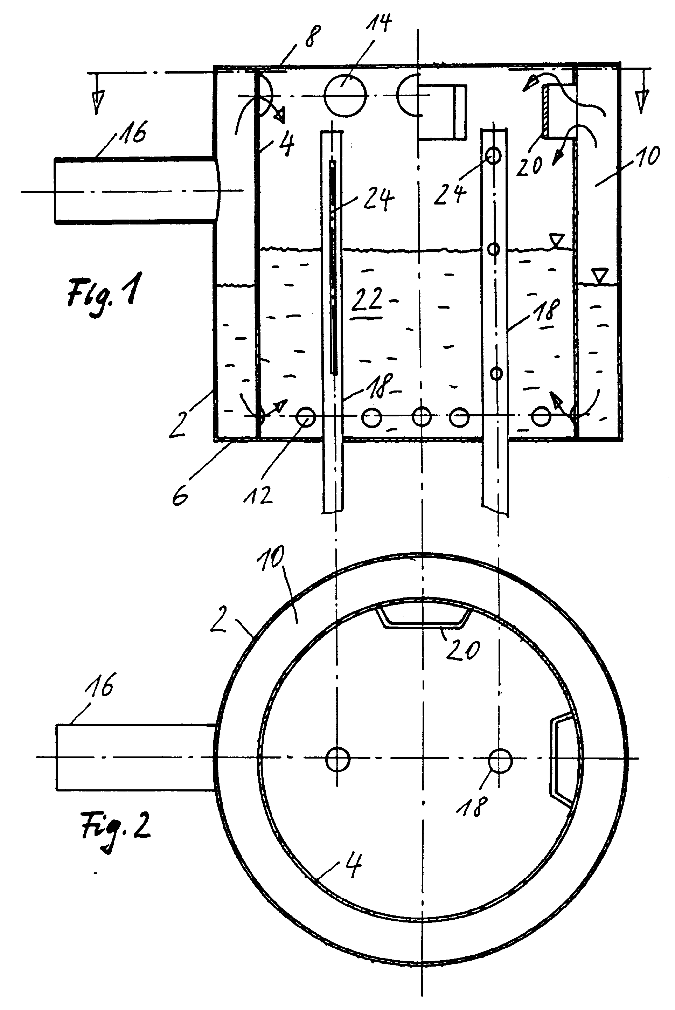

Die in den Fig. 1 und 2 gezeigte Vorrichtung zum Verteilen eines strömenden Flüssigkeits-Gas-Gemisches in mehrere Teilströme besteht aus einem äußeren Zylinder 2 mit vertikaler Achse, in dem ein innerer Zylinder 4 konzentrisch angeordnet ist. Der innere Zylinder 4 stützt sich am Boden und an der Decke des äußeren Zylinders 2 ab. Der äußere Zylinder 2 und der innere Zylinder 4 begrenzen daher einen Ringraum 10. Der innere Zylinder 4 ist nahe seinem unteren und oberen Endbereich mit unteren und oberen Überströmöffnungen 12 und 14 versehen. In den oberen Bereich des äußeren Zylinders 2 mündet rechtwinklig ein Zuführrohr 16 für das Flüssigkeits-Gas-Gemisch ein. Abweichend von dem gezeigten Ausführungsbeispiel könnte das Zuführrohr auch tangential in den äußeren Zylinder 2 einmünden. Durch den Boden 6 des äußeren Zylinders 2 sind zwei vertikale Abführrohre 18 hindurchgeführt, die in den vom inneren Zylinder 4 begrenzten Innenraum hineinragen. Die beiden Abführrohre 18 sind am oberen Ende offen und im Bereich ihrer Wandung mit einem Längsschlitz 24 und/oder mit mehreren Bohrungen versehen.

Die oberen und unteren Überströmöffnungen 12 und 14 des inneren Zylinders 4 können als runde Öffnungen ausgebildet sein, wobei die Querschnittsfläche der oberen Überströmöffnungen 14 größer ist als diejenige der unteren Überströmöffnungen 12. Wie dies in der rechten Hälfte von Fig. 1 gezeigt ist, können die oberen Überströmöffnungen 14 auch durch nach oben und unten offene Einprägungen 20 des inneren Zylinders 4 gebildet sein.

Im Betrieb der Vorrichtung bildet sich ein Flüssigkeitsvorrat 22, wobei die flüssige Phase aus dem von dem inneren Zylinder 4 begrenzten Innenraum durch die seitlichen Öffnungen 24 der Abführrohre 18 entweicht, wogegen die gasförmige Phase durch die endseitigen Öffnungen der Abführrohre 18 entweicht.

In dem Ringraum 10 erfolgt eine Phasentrennung des durch das Zuführrohr 16 mit hoher Geschwindigkeit einströmenden Flüssigkeits-Gas-Gemischs. Die gasförmige Phase entweicht sofort nach dem Eintritt in den Ringraum 10 nach oben, während die flüssige Phase durch die Schwerkraft in den Flüssigkeitsvorrat 22 unterhalb der Einmündung des Zuführrohrs 16 fällt. Durch den inneren Zylinder 4 wird verhindert, daß die eintretende Flüssigkeit sich mit dem Teil des Flüssigkeitsvorrats vermischt, aus dem die Verteilung in die Abführrohre 18 erfolgt und dessen Spiegel möglichst weitgehend beruhigt sein muß.

Der Eintritt der flüssigen und der gasförmigen Phase in den von dem inneren Zylinder 4 begrenzten Innenraum erfolgt durch die unteren und oberen Überströmöffnungen 12 und 14 am unteren und oberen Rand des inneren Zylinders 4. Die Größe der Querschnittsfläche dieser Überströmöffnungen richtet sich nach den Massenströmen und Zuständen der beiden Phasen. Sie müssen so bemessen sein, daß die Flüssigkeitsspiegel innerhalb und außerhalb des inneren Zylinders 4 gleich hoch sind bzw. bei großen Massenströmen der äußere Flüssigkeitsspiegel tiefer als der innere liegt. Da der Volumenstrom der gasförmigen Phase wesentlich größer ist als derjenige der flüssigen Phase ist auch der Druckverlust im Bereich der oberen Überströmöffnungen 14 größer. Mit zunehmendem Massendurchsatz durch das Zuführrohr 16 nimmt der im Gasraum des inneren Zylinders 4 herrschenden Druck gegenüber dem im Gasraum des Ringraums 10 herrschenden Druck ab. Das bedeutet, daß der im Ringraum 10 herrschende Flüssigkeitsspiegel mit zunehmendem Massendurchsatz gegenüber dem Flüssigkeitsspiegel des von dem inneren Zylinder 4 begrenzten Flüssigkeitsvorrats 22 zunehmend absinkt.

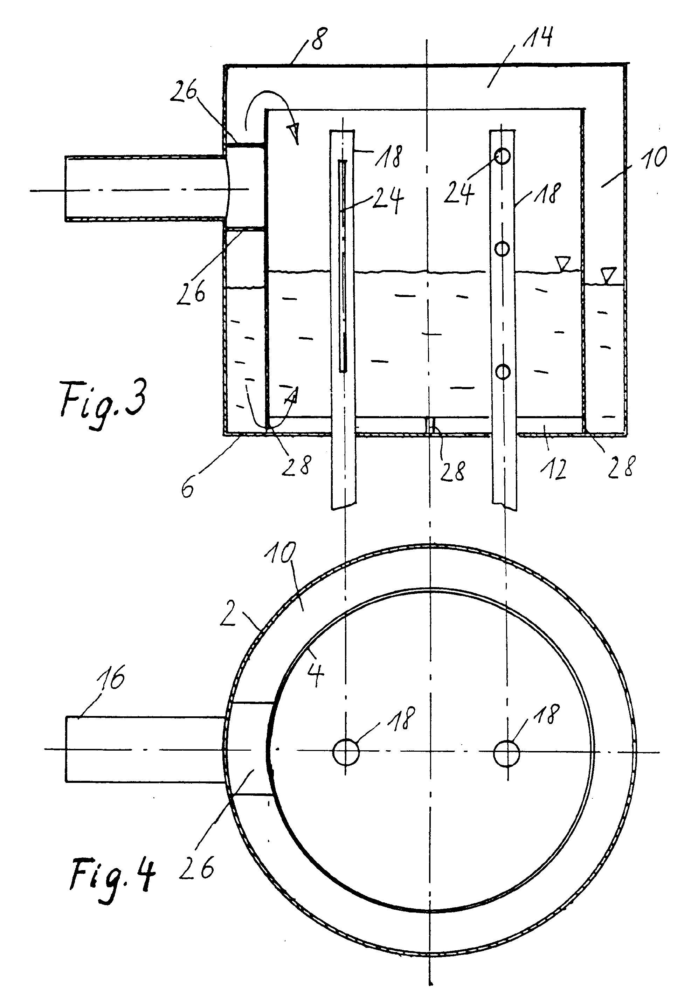

Um auch bei sehr hohen Massenströmen einen Übertritt von Flüssigkeitsteilchen über den Gasweg durch die oberen Überströmöffnungen 14 zu vermeiden, sind bei dem in den Fig. 3 und 4 gezeigten Ausführungsbeispiel Abweisbleche 26 vorgesehen, die verhindern, daß beim Eintritt des Gemisches in den Ringraum 10 Flüssigkeit weder nach oben in den Gasraum noch nach unten in den Flüssigkeitsvorrat spritzen kann. Diese Abweisbleche 26 sind vorzugsweise aus dem inneren Zylinder 4 herausgebogen. Die dadurch entstehenden Lücken in der Wand schaden nicht, weil in ihrem Bereich keine Flüssigkeit auftritt.

Abweichend von dem gezeigten Ausführungsbeispiel können diese Abweisbleche auch als horizontale durchbrochene Ringe ausgebildet sein, deren Durchbrüche mit zunehmender Entfernung von der Eintrittsöffnung des Zuführrohres 16 größer werden. Aus fertigungstechnischen Gründen kann es auch zweckmäßig sein, den dadurch entstehenden Ringkanal als Rohr auszubilden, das oben und unten mit Durchbrüchen versehen ist.

Bei dem in den Fig. 3 und 4 gezeigten Ausführungsbeispiel stützt sich der innere Zylinder 4 mit Stegen 28 auf dem Boden 6 des äußeren Zylinders 2 ab. Da der innere Zylinder 4 im Abstand vom Boden 6 und der Decke 8 des äußeren Zylinders 2 endet, entstehen durchgehende obere und untere umlaufende Überströmöffnungen.

Die Erfindung beschränkt sich nicht auf die der Einfachheit halber als Kreiszylinder dargestellte Ausführungsform, sonderen es sind auch andere Querschnitte der beiden Zylinder möglich. Die beiden Zylinder müssen auch nicht konzentrisch sein.

Es kann auch zweckmäßig sein, den inneren Zylinder als hyperboloidähnliche Fläche auszubilden.

Ferner können in dem inneren Zylinder auch mehr als zwei Abführrohre angeordnet sein.

## Patentansprüche

1. Vorrichtung zum Verteilen eines strömenden Flüssigkeits-Gas-Gemisches in mehrere Teilströme mit vorgebbaren Verhältnissen von Flüssigkeits-zu-Gasmassenstrom, bestehend aus einem zylindrischen Abscheider (2) mit vertikaler Achse, in den ein Zuführrohr (16) für das Gemisch einmündet und durch dessen Boden (6) wenigstens zwei vertikale Abführrohre (18) für die Teilströme in den Abscheider hineingeführt sind, wobei die Zuführ- und Abführrohre oberhalb des Flüssigkeitsspiegels im Abscheider enden und wobei in den Abführrohren (18) sowohl oberhalb als auch unterhalb des Flüssigkeitsspiegels Durchtrittsöffnungen (24) vorhanden sind, dadurch **gekennzeichnet,** daß das Zuführrohr (16) im wesentlichen horizontal ist, daß in dem Abscheider (2) ein innerer Zylinder (4) im wesentlichen achsparallel angeordnet ist, der die Abführrohre (18) umgibt und daß der von dem Abscheider (2) und dem inneren Zylinder (4) begrenzte Ringraum (10) mit dem Innenraum des inneren Zylinders (4) über Überströmöffnungen (12, 14) verbunden ist, die nahe dem Boden (6) und der Decke (8) des Abscheiders (2) angeordnet sind, wobei die gesamte Querschnittsfläche der oberen Überströmöffnungen (14) größer ist als diejenige der unteren Überströmöffnungen (12).

2. Vorrichtung nach Anspruch 1, dadurch **gekennzeichnet,** daß die Überströmöffnungen (12, 14) aus dem inneren Zylinder (4) ausgenommen sind.

3. Vorrichtung nach Anspruch 2, dadurch **gekennzeichnet,** daß die oberen Überströmöffnungen (14) durch nach oben und unten offene Einprägungen (20) des inneren Zylinders (4) gebildet sind.

4. Vorrichtung nach einem der Ansprüche 1 bis 3, dadurch **gekennzeichnet,** daß zumindest im Mündungsbereich des Zuführrohres (16) obere und untere Abweisbleche (26) angeordnet sind.

5. Vorrichtung nach Anspruch 4, dadurch **gekennzeichnet,** daß die Abweisbleche (26) aus dem inneren Zylinder (4) ausgestanzt sind.

6. Vorrichtung nach Anspruch 4, dadurch **gekennzeichnet,** daß die Abweisbleche mit Durchtrittsöffnungen versehene Ringe sind, die in den Ringraum (10) zwischen dem Abscheider (2) und dem inneren Zylinder (4) eingesetzt sind.

7. Vorrichtung nach Anspruch 6, dadurch **gekennzeichnet,** daß die Fläche der Durchtrittsöffnungen mit dem Abstand von der Mündung des Zuführrohres (16) zunimmt.


## Claims

1. Apparatus for dividing a flowing mixture of liquid and gas into a plurality of separate streams with preset liquid to gas material throughput ratios, consisting of a cylindrical separator (2) with a vertical axis, into which a feed pipe (16) for the mixture discharges and through the floor (6) of which at least two vertical outflow pipes (18) for the separate streams lead into the separator, the feed and outflow pipes terminating above the level of liquid in the separator and passages (24) being provided in the outflow pipes (18) both above and below the level of the liquid, **characterised** in that the feed pipe (16) is substantially horizontal, that an inner cylinder (4) is arranged substantially parallel to the axis in the separator (2) and encloses the outflow pipes (18), and that the annular compartment (10) delimited by the separator (2) and the inner cylinder (4) is connected to the inner compartment of the inner cylinder (4) by means of overflow openings (12, 14) disposed near the floor (6) and ceiling (8) of the separator (2), the overall cross-sectional area of the upper overflow openings (14) being larger than that of the lower overflow openings (12).

2. Apparatus according to claim 1, **characterised** in that the overflow openings (12, 14) are made in the inner cylinder (4).

3. Apparatus according to claim 2, **characterised** in that the upper overflow openings (14) are constituted by impressions (20) in the inner cylinder (4) which are open to the top and bottom.

4. Apparatus according to one of claims 1 to 3, **characterised** in that at least near the mouth of the feed pipe (16) are arr anged upper and lower deflectors (26).

5. Apparatus according to claim 4, **characterised** in that the deflectors (26) are punched out of the inner cylinder (4).

6. Apparatus according to claim 4, **characterised** in that the deflectors are rings incorporating passages, which are inserted into the annular compartment (10) between the separator (2) and the inner cylinder (4).

7. Apparatus according to claim 6, **characterised** in that the area of the passages increased within the distance from the mouth of the feed pipe (16).


## Revendications

1. Dispositif pour distribuer un courant de mélange liquide-gaz en plusieurs courants partiels avec des rapports prédéfinissables de courant de masse liquide à courant de masse gazeux, se composant d'un séparateur (2) cylindrique à axe vertical, dans lequel débouche un tube d'alimentation (16) pour le mélange et au travers du fond duquel (6) sont introduits dans le séparateur au moins deux tubes d'évacuation (18) verticaux pour les courants partiels, les tubes d'alimentation et d'évacuation se terminant dans le séparateur au-dessus du niveau du liquide et des ouvertures de passage (24) existant dans les tubes d'évacuation (18) aussi bien au-dessus qu'en-dessous du niveau de liquide, **caractérisé** : en ce que le tube d'alimentation (16) est essentiellement horizontal, en ce qu'un cylindre intérieur (4) est disposé avec un axe essentiellement parallèle dans le séparateur (2) cylindrique qui entoure les tubes d'évacuation (18) et en ce que la chambre annulaire (10) délimitée par le séparateur (2) et le cylindre intérieur (4) est reliée à l'espace intérieur du cylindre intérieur (4) par des ouvertures de passage de flux (12, 14) qui sont placées près du fond (6) et du couvercle (8) du séparateur (2), la surface de la section transversale des ouvertures de passage de flux supérieures (14) étant plus grande que celle des ouvertures de passage de flux inférieures (12).

2. Dispositif selon la revendication 1, **caractérisé** en ce que les orifices de passage de flux (12, 14) sont enlevés du cylindre intérieur (4).

3. Dispositif selon la revendication 2, **caractérisé** en ce que les ouvertures de passage de courant supérieures (14) sont réalisées par des pièces (20) ouvertes vers le haut et vers le bas appliquées contre l'intérieur du cylindre (4).

4. Dispositif selon une des revendications 1 à 3, **caractérisé** en ce qu'au moins dans la zone d'entrée du tube d'alimentation (16) sont disposées des tôles de déviation (26) supérieures et inférieures.

5. Dispositif selon la revendication 4, **caractérisé** en ce que les tôles de déviation (26) sont matricées à partir du cylindre intérieur (4).

6. Dispositif selon la revendication 4, **caractérisé** en ce que les tôles de déviation sont des anneaux munis d'orifices de passage qui sont mis en oeuvre dans la chambre annulaire (10) entre le séparateur (2) et le cylindre intérieur (4).

7. Dispositif selon la revendication 6, **caractérisé** en ce que la surface des orifices de passage augmente avec la distance de l'embouchure du tube d'alimentation (16).

Fig. 1

Fig. 2

Fig.3

Fig.4